# EUROPÄISCHE PATENTSCHRIFT

(11) **EP 0 800 968 B1**
(45) Veröffentlichungstag und Bekanntmachung des Hinweises auf die Patenterteilung: **05.10.2005**
(21) Anmeldenummer: 97105240.2
(22) Anmeldetag: 27.03.1997
(51) Int. Cl.: B60R 22/20

(54) **Gurthöhenversteller für ein Fahrzeug-Sicherheitsgurtsystem**
Height adjustment device for a vehicle safety belt system
Dispositif de réglage en hauteur d'un système de sécurité pour véhicule

(30) Priorität: 10.04.1996 DE 29606526 U
(43) Veröffentlichungstag der Anmeldung: 15.10.1997
(73) Patentinhaber: TRW Automotive GmbH, 73553 Alfdorf (DE)
(72) Erfinder: Holzapfel, Volker, 66606 St. Wendel (DE); Petzi, Jürgen, 73312 Geislingen-Eybach (DE)
(74) Vertreter: Degwert, Hartmut

(56) Entgegenhaltungen:
- DE-A- 4 308 366
- DE-A- 4 327 820
- DE-A- 4 410 464
- FR-A- 2 664 549
- US-A- 4 538 832

## Beschreibung

Die Erfindung betrifft einen Gurthöhenversteller für ein Fahrzeug-Sicherheitsgurtsystem nach dem Oberbegriff des Anspruchs 1.

Durch einen Gurthöhenversteller läßt sich der Verlauf des Sicherheitsgurts in einem Fahrzeug optimal an die Größe des jeweiligen Fahrzeuginsassen anpassen. Üblicherweise wird ein Umlenkbeschlag für das Gurtsystem höhenverstellt, indem ein Rastmechanismus an einem Schlitten in eine entsprechende Rastöffnung in einer Schiene eingreift. Wird jedoch die Lage des Schlitten nicht so exakt eingestellt, daß der Rastmechanismus in eine Rastöffnung einklinken kann, sondern zwischen zwei Rastöffnungen steht, kommt es bei einem Unfall zu einem Verschieben des Schlittens aufgrund des auftretenden Zuges im Sicherheitsgurt, so daß die durch den Sicherheitsgurt gewünschte Rückhaltung nicht so früh wie gewünscht eintritt. Dieses Problem wird noch verschärft, wenn das Sicherheitsgurtsystem mit einem Gurtstraffer versehen ist, der bei einem Unfall die Gurtlose aus dem Gurtsystem entfernen soll. Die auf den Gurthöhenversteller dadurch zusätzlich einwirkenden Kräfte können sogar dazu führen, daß der Rastmechanismus nach dem Verschieben des Schlittens nicht in die nächste Rastöffnung eingreift, sondern über diese hinweggezogen wird, wodurch die durch den Gurtstraffer normalerweise zu erzielende Wirkung beeinträchtigt wird. Es sind daher Rastmechanismen bekannt, die ein Eingreifen in die jeweils nächstgelegene Rastöffnung auch dann gewährleisten sollen, wenn der Schlitten relativ stark zum Fahrzeugnach unten bechleunigt wird. Diese bekannten Rastmechanismen arbeiten jedoch nicht sicher genug, so daß auch bei ihrer Verwendung die Wirkung des Gurtstraffers beeinträchtigt werden kann.

Aus der gattungsgemäßen FR-A-2664549 ist ein Gurthöhenversteller bekannt, der einen zusätzlichen Verriegelungskörper aufweist, welchem durch eine andere Feder mit einer von ihm abstehenden Nase in ein Eck gedrückt wird, das als Schwenklager dient. Beim schnellen Bewegen des Höhenverstellers nach unten schwenkt der Verriegelungskörper gegen die Kraft der Feder in Richtung zum Querflansch der U-Profil-Schiene, um dort in Öffnungen einzudringen.

Aufgabe der Erfindung ist es deshalb, einen Gurthöhenversteller zu schaffen, der bei nicht in die Rastöffnung eingeklinktem Rastmechanismus eine Verschiebung des Schlittens bei einer Zugwirkung im Sicherheitsgurt, insbesondere in Verbindung mit einer Gurtstraffung, weitgehend vermeidet.

Diese Aufgabe wird durch einen Gurthöhenversteller nach Anspruch 1 gelöst. Die exzentrisch gelagerte Sperrklinke schwenkt aufgrund ihrer trägen Masse bereits nach einer minimalen Verschiebung des Schlittens so weit nach außen, daß sie ein Verkeilen des Schlittens seitlich in der U-Profil-Schiene hervorruft und diesen arretiert, so daß unabhängig vom Rastmechanismus eine zusätzliche Bremswirkung erreicht wird.

Gemäß einer bevorzugten Ausführungsform sind an der Innenseite desjenigen Seitenflansches, an dem die Sperrklinke angreift, Einrastflächen für die Sperrklinke vorgesehen, die einer Verschiebung des Schlittens zusätzlich entgegenwirken und ein schnelles Verschwenken der Sperrklinke sicherstellen, damit es nicht vorkommen kann, daß die Sperrklinke erst einige Millimeter an der Innenseite des Seitenflansches entlanggleitet, bevor sie nach außen schwenkt.

Bei einer weiteren Ausführungsform sind zwei gegensinnig verschwenkbare Sperrklinken am Schlitten vorhanden, die in der Sperrstellung an den gegenüberliegenden Seitenflanschen angreifen und sich gegeneinander verkeilen. Vorzugsweise sind die beiden Sperrklinken dabei an einer gemeinsamen Achse angelenkt. Bei dieser Ausführungsform bleibt der Schlitten in der Sperrstellung weitgehend unbelastet von den durch das Verkeilen der Sperrklinken hervorgerufenen Kräfte, da die von einer Sperrklinke hervorgerufene Kraft unmittelbar über die Achse in die andere Sperrklinke eingeleitet wird und umgekehrt.

Eine weitere Ausführungsform sieht vor, daß die Sperrklinke in der Sperrstellung, in der sie an einem Seitenflansch angreift, eine solche seitliche Verschiebung des Schlittens hervorruft, daß eine Rastnase am Schlitten in eine von mehreren voneinander beabstandeten Ausnehmungen am gegenüberliegenden Seitenflansch eingreift. Bei dieser Ausführungsform, die vorzugsweise nur mit einer Sperrklinke arbeitet, wird der Schlitten seitlich verlagert, so daß er selbst über seine Rastnase zu seiner Arretierung beiträgt. Die Ausnehmungen sind vorzugsweise so gering als möglich voneinander beabstandet, damit der Verstellweg bis zum Arretieren des Schlittens möglichst gering gehalten wird.

Die Ausnehmungen können auch die Rastöffnungen in der Schiene sein, so daß keine zusätzlichen Ausnehmungen mehr vorhanden sein müssen. Der am Schlitten vorgesehene Rastmechanismus ist üblicherweise so versetzt zur Rastnase, daß er in eine nicht von der Rastnase belegte Rastöffnung eingreift.

Die Erfindung wird nachfolgend unter Bezugnahme auf zwei Ausführungsformen beschrieben, die in den Zeichnungen dargestellt sind. In diesen zeigen:
Fig. 1 eine Seitenansicht einer ersten Ausführungsform des erfindungsgemäßen Gurthöhenverstellers, wobei der linke Teil der U-Profil-Schiene weggeschnitten ist;
Fig. 2 eine perspektivische Ansicht des Gurthöhenverstellers von Fig. 1, ebenfalls ohne den linken Teil der U-Profil-Schiene;
Fig. 3 eine perspektivische Ansicht einer zweiten Ausführungsform des erfindungsgemäßen Gurthöhenverstellers;
Fig. 4 eine Draufsicht auf den in Fig. 3 gezeigten Gurthöhenversteller; und
Figuren 5a bis 5c Varianten des in Fig. 3 und 4 gezeigten Gurthöhenverstellers in Draufsicht und Detailansicht.

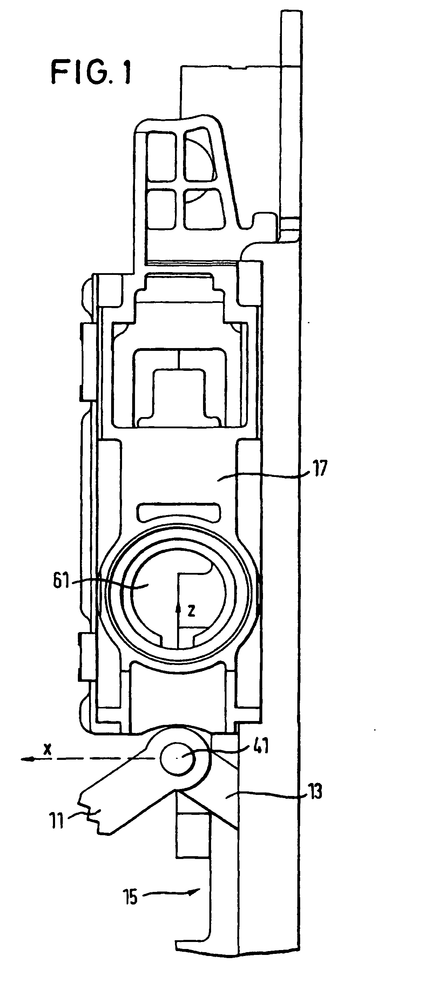

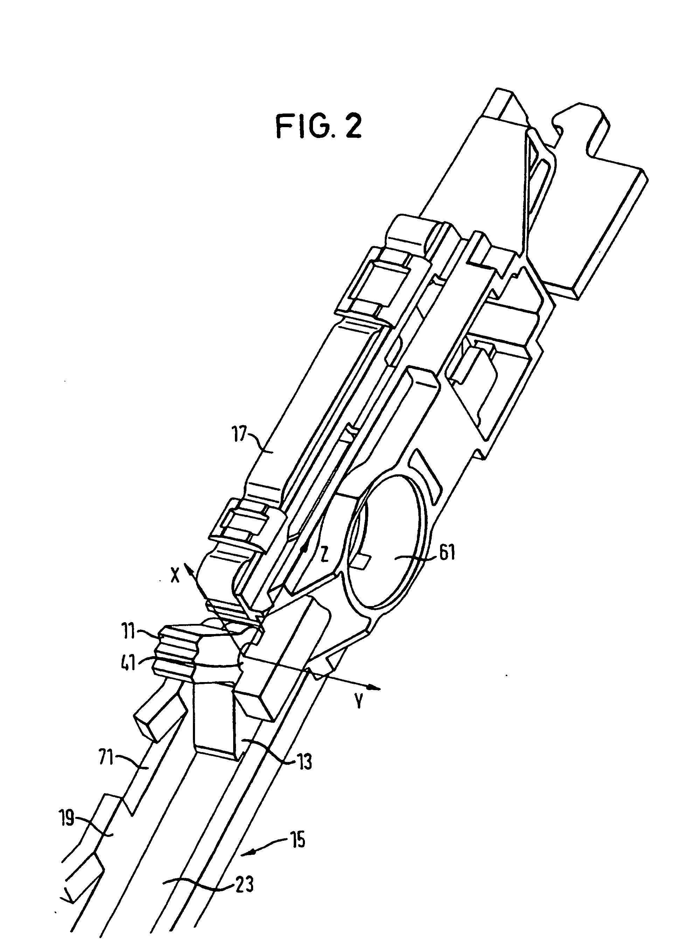

In den Figuren 1 und 2 ist eine erste Ausführungsform eines Gurthöhenverstellers dargestellt, der eine fahrzeugfeste U-Profil-Schiene 15 und einen darin verschiebbar gelagerten Schlitten 17 umfaßt. Die U-Profil-Schiene 15 besteht aus zwei gegenüberliegenden Seitenflanschen, wovon in Fig. 2 lediglich der rechte Seitenflansch 23 gezeigt ist. Die beiden Seitenflansche sind durch einen Querflansch 19 miteinander verbunden, in welchem Rastöffnungen 71 für einen am Schlitten 17 (nicht gezeigten) Rastmechanismus vorgesehen sind. Durch Betätigung des Rastmechanismus kann der Schlitten 17 in Längsrichtung der U-Profil-Schiene 15 relativ zum Fahrzeug nach oben und nach unten verschoben werden, bis er in eine andere Rastöffnung 71 eingreift. Eine Öffnung 61 im Schlitten 17 dient zur Anbringung eines in den Figuren 1 und 2 nicht gezeigten Bolzens mit einem Umlenkbeschlag für einen Sicherheitsgurt.

Am Schlitten 17 ist eine Achse 41 angeformt, an der zwei Sperrklinken 11, 13 exzentrisch angelenkt sind. Die linke Sperrklinke 11 erstreckt sich in der in Fig. 1 gezeigten Ruhestellung, in der bei geöffnetem Rastmechanismus der Schlitten 17 höhenverstellbar ist, bis nahe zum linken Seitenflansch der U-Profil-Schiene 15 und die rechte Sperrklinke 13 bis nahe zum rechten Seitenflansch 23. An ihren den Seitenflanschen zugewandten vorderen Stirnseiten sind an jeder Sperrklinke 11, 13 Eingriffskanten vorgesehen, die ein Angreifen am jeweiligen Seitenflansch verbessern.

Wird der Schlitten 17 bei einem Unfall z.B. durch einen Gurtstraffer nach unten beschleunigt und ist der Rastmechanismus nicht in einer Rastöffnung 71 eingeklinkt, sondern zwischen zwei benachbarten Rastöffnungen 71 gelegen, würde der Schlitten 17 üblicherweise bis zur angrenzenden unteren Rastöffnung 71 verschoben werden, wodurch der Sicherheitsgurt kein sofortiges Rückhalten des Fahrzeuginsassen gewährleisten würde. Um die Verschiebung zu verhindern, schwenken die beiden Sperrklinken 11, 13 aufgrund ihrer trägen Masse gegenüber dem nach unten bewegten Schlitten 17 um ihre Achse 41 in entgegengesetzten Richtungen nach oben, so daß sie sich an ihrem zugeordneten Seitenflansch abstützen und gegeneinander verkeilen und sich der Schlitten 17 nicht weiter nach unten bewegen kann. Der Schlitten 17 bewegt sich lediglich um einige wenige Millimeter nach unten und nicht um einige Zentimeter, wie bei einem Schlitten ohne Sperrklinken 11, 13. Die durch den Sperrklinkenmechanismus aufnehmbare Kraft ist extrem hoch, da sich die Sperrklinken 11, 13 kurz vor Erreichen ihres Totpunkts, in dem sie rechtwinkelig zur Vertikalen angeordnet sind, gegenseitig verkeilen.

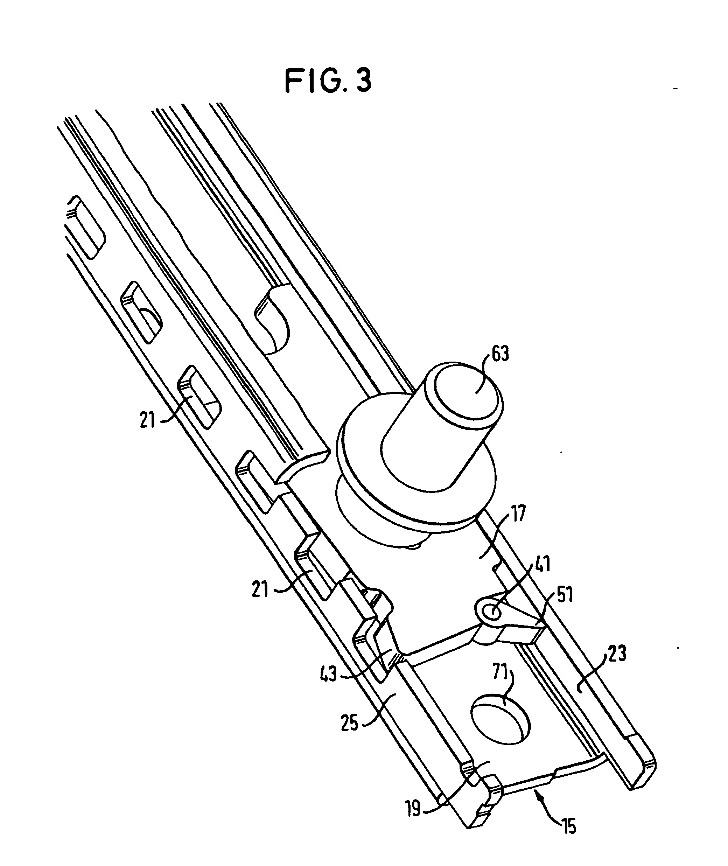

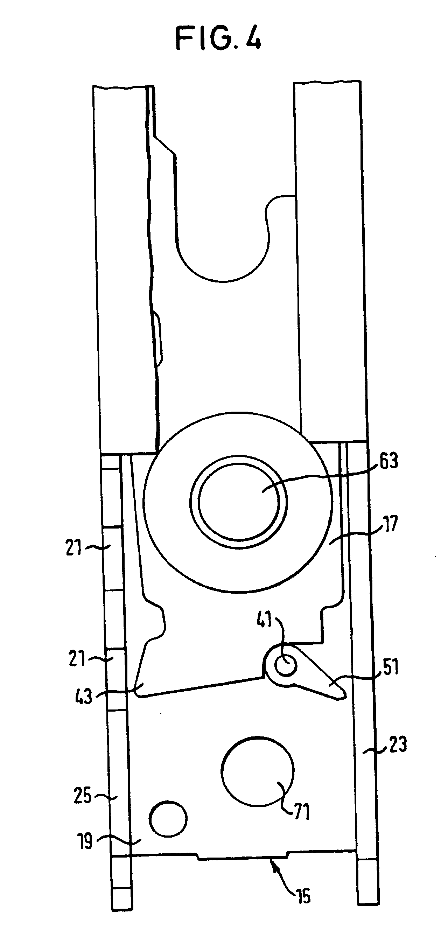

Die zweite Ausführungsform des Gurthöhenverstellers, die in den Figuren 3 bis 5 gezeigt ist, umfaßt einen Schlitten 17, an dem ein Bolzen 63 zur Anlenkung eines nicht gezeigten Umlenkbeschlags befestigt ist. Die U-Profil-Schiene 15 weist an ihrem Querflansch 19 mehrere gleichmäßig voneinander beabstandete Rastöffnungen 71 sowie Ausnehmungen 21 am linken Seitenflansch 25 der U-Profil-Schiene 15 auf. Die Ausnehmungen 21 haben einen geringeren Abstand zueinander als die Rastöffnungen 71. Eine am linken unteren Ende des Schlittens 17 angeformte Rastnase 43 ist so ausgebildet, daß sie bei Verschiebung des Schlittens 17 nach links in die Ausnehmungen 21 eingreifen kann. Am rechten unteren Ende des Schlittens 17 weist dieser eine angeformte Achse 41 auf, an der eine Sperrklinke 51 exzentrisch gelagert ist. Das freie Ende der Sperrklinke berührt in der in Fig. 3 und 4 gezeigten Ruhestellung des Gurthöhenverstellers fast den rechten Seitenflansch 23.

Ist der Schlitten 17 nicht so exakt in seiner Höhe ausgerichtet, daß der nicht gezeigte Rastmechanismus in eine entsprechende Rastöffnung 71 einklinkt, so wird der Schlitten 17 im Kollisionsfall stark nach unten beschleunigt, und die exzentrisch gelagerte Sperrklinke 51 schwenkt aufgrund ihrer trägen Masse gegen den Uhrzeigersinn nach oben, greift an dem rechten Seitenflansch 23 an und verschiebt dadurch den Schlitten 17 geringfügig nach links. Ist der Schlitten 17 dabei in einer solchen Stellung, daß die Rastnase 43 auf Höhe einer Ausnehmung 21 liegt, dringt die Rastnase 43 in diese Ausnehmung 21 ein und verhindert so eine weitere Bewegung des Schlittens 17. Ist die Rastnase 43 beim Beginn des Beschleunigens des Schlittens 17 zwischen zwei Ausnehmungen 21 gelegen, so verschiebt die geringfügig nach oben geschwenkte Sperrklinke 51 den Schlitten 17 samt seiner Rastnase 43 so weit nach links, daß diese am linken Seitenflansch 25 anliegt und sich der Schlitten 17 in der U-Profil-Schiene verkeilt.

Darüber hinaus ist es auch möglich, daß die Ausnehmungen 21 mit den Rastöffnungen 71, wenn diese an dem Seitenflansch 25 vorgesehen sind, zusammenfallen.

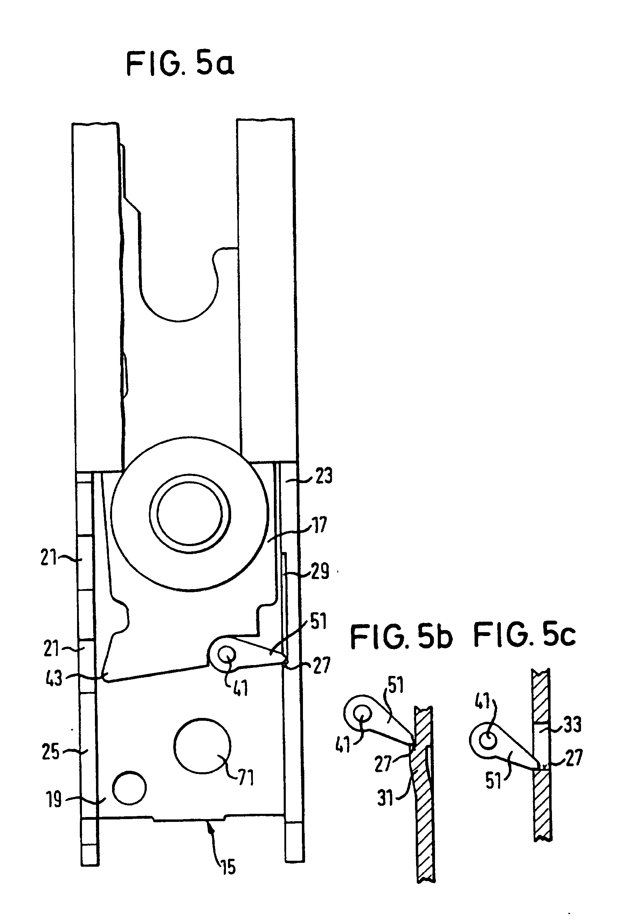

Weiter können, gemäß den Figuren 5a bis 5c, an der Innenseite des Seitenflansches 23, an der die Sperrklinke 51 angreift, Einrastflächen 27 in vorgegebenen Abständen vorhanden sein, die ein Durchrutschen der Sperrklinke 51 verhindern und ein Verschieben des Schlittens 17 zusätzlich unmöglich machen, wenn die Sperrklinke 51 an einer Einrastfläche 27 anliegt.

Die Einrastflächen 27 verlaufen senkrecht zur Innenseite des Seitenflansches 23 und können, wie in Fig. 5a gezeigt, jeweils durch eine Ausnehmung 29 oder, wie in Fig. 5b gezeigt, durch eine nach innen gerichtete Formprägung 31 entstehen. Darüber hinaus sind selbstverständlich auch nach außen gerichtete Formprägungen möglich. Ebenso können die Einrastflächen 27 durch Durchbrüche, wie in Fig. 5c anhand des Durchbruchs 33 gezeigt, gebildet sein.

## Patentansprüche

1. Gurthöhenversteller für ein Fahrzeug-Sicherheitsgurtsystem, mit einer fahrzeugfesten, mit Rastöffnungen (71) versehenen U-Profil-Schiene (15) und einem in dieser verschiebbaren Schlitten (17), der mit einem mit den Rastöffnungen (71) zusammenwirkenden Rastmechanismus zum Haltern des Schlittens (17) in einer vom Bediener gewünschten Stellung versehen ist, wobei an dem Schlitten (17) zumindest eine vom Rastmechanismus unabhängige, separate Sperrklinke (11, 13; 51) so exzentrisch am Schlitten (17) schwenkbar gelagert ist, daßsich die Sperrklinke (11, 13; 51) aus einer Ruhestellung, in der sie ein Verschieben des Schlittens (17) zuläßt, aufgrund einer nach unten gerichteten Beschleunigung und ihrer. Trägheit in eine Sperrstellung verschwenkt **dadurch gekennzeichnet, daß** die Sperrklinke (11, 13; 51) mittels einer sich senkrecht zum Querflansch (19) der U-Profil-Schiene (15) erstreckenden Achse (41) schwenkbar so am Schlitten (17) gelagert ist, daß sie in der Sperrstellung an einem Seitenflansch (23) der U-Profil-Schiene (15) angreift und den Schlitten (17) in dieser verkeilt.

2. Gurthöhenversteller nach Anspruch 1, **dadurch gekennzeichnet, daß** an der Innenseite des Seitenflansches (23), an dem die Sperrklinke (51) angreift, Einrastflächen (27) für die Sperrklinke (51) vorgesehen sind, die einer Verschiebung des Schlittens (17) zusätzlich entgegenwirken.

3. Gurthöhenversteller nach Anspruch 2, **dadurch gekennzeichnet, daß** die Einrastflächen (27) durch nach außen oder nach innen gerichtete Formprägungen (31) am Seitenflansch (23) gebildet sind.

4. Gurthöhenversteller nach Anspruch 2, **dadurch gekennzeichnet, daß** die Einrastflächen (27) durch Ausnehmungen (29) oder Durchbrüche (33) an dem Seitenflansch (23) gebildet sind.

5. Gurthöhenversteller nach einem der vorstehenden Ansprüche, **dadurch gekennzeichnet, daß** zwei gegensinnig verschwenkbare Sperrklinken (11, 13) am Schlitten (17) vorgesehen sind, die in der Sperrstellung an gegenüberliegenden Seitenflanschen (23, 25) angreifen und sich gegeneinander verkeilen.

6. Gurthöhenversteller nach Anspruch 5, **dadurch gekennzeichnet, daß** die Sperrklinken (11, 13) an einer gemeinsamen Achse (41) angelenkt sind.

7. Gurthöhenversteller nach einem der Ansprüche 1 bis 4, **dadurch gekennzeichnet, daß** die Sperrklinke (51) in der Sperrstellung, in der sie an einem Seitenflansch (23) angreift, eine solche seitliche Verschiebung des Schlittens (17) hervorruft, daß eine Rastnase (43) am Schlitten (17) in eine von mehreren voneinander beabstandeten Ausnehmungen (21) am gegenüberliegenden Seitenflansch (25) eingreift.

8. Gurthöhenversteller nach Anspruch 7, **dadurch gekennzeichnet, daß** die Ausnehmungen (21) die Rastöffnungen (71) in der U-Profil-Schiene (15) sind.

9. Gurthöhenversteller nach einem der vorhergehenden Ansprüche, **dadurch gekennzeichnet, daß** die Sperrklinke (11, 13; 51) frei schwenkbar gelagert ist.

## Claims

1. A belt height adjuster for a vehicle safety belt system, comprising a vehicle-fixed U-shaped rail (15) provided with detent openings (71), and a sled (17) adapted to be displaced in the U-shaped rail, the sled being provided with a detent mechanism cooperating with the detent openings (71) for fixing the sled (17) in a position desired by the operator, at least one separate locking pawl (11, 13; 51), which is independent of the detent mechanism, being eccentrically mounted on the sled (17) for pivoting movement on the sled (17) such that due to a downwardly directed acceleration and its inertia, the locking pawl (11, 13; 51) pivots out of a neutral position in which it permits a displacement of the sled (17), into a locking position, **characterized in that** the locking pawl (11, 13; 51), by means of a pin (41) extending perpendicularly to the transverse flange (19) of the U-shaped rail (15), is mounted on the sled (17) for pivoting movement such that in the locking position it engages a side flange (23) of the U-shaped rail (15) and jams the sled (17) in the U-shaped rail.

2. The belt height adjuster as claimed in claim 1, **characterized in that** on the inner side of the side flange (23) which is engaged by the locking pawl (51), latching surfaces (27) for the locking pawl (51) are provided which additionally counteract a displacement of the sled (17).

3. The belt height adjuster as claimed in claim 2, **characterized in that** the latching surfaces (27) are defined by outwardly or inwardly directed, embossed structures (31) on the side flange (23).

4. The belt height adjuster as claimed in claim 2, **characterized in that** the latching surfaces (27) are defined by recesses (29) or through openings (33) in the side flange (23).

5. The belt height adjuster as claimed in any of the preceding claims, **characterized in that** the sled (17) is provided with two locking pawls (11, 13) which are adapted to be pivoted in opposite directions and which in the locking position engage opposite side flanges (23, 25) and mutually jam each other.

6. The belt height adjuster as claimed in claim 5, **characterized in that** the locking pawls (11, 13) are hinged on a shared pin (41).

7. The belt height adjuster as claimed in any of claims 1 to 4, **characterized in that** in the locking position, in which it engages a side flange (23), the locking pawl (51) causes a lateral displacement of the sled (17) such that a latching nose (43) on the sled (17) engages into one of a plurality of mutually spaced recesses (21) in the opposite side flange (25).

8. The belt height adjuster as claimed in claim 7, **characterized in that** the recesses (21) are the detent openings (71) in the U-shaped rail (15).

9. The belt height adjuster as claimed in any of the preceding claims, **characterized in that** the locking pawl (11, 13; 51) is mounted for free pivoting movement.

## Revendications

1. Dispositif de réglage en hauteur de ceinture pour un système de ceinture de sécurité de véhicule, comportant une glissière profilée en U (15) solidaire du véhicule et pourvue d'ouvertures d'enclenchement (71) et un chariot (17) déplaçable dans celle-ci, qui est pourvu d'un mécanisme d'enclenchement coopérant avec les ouvertures d'enclenchement (71) pour fixer le chariot (17) dans une position souhaitée par l'utilisateur, au moins un cliquet d'arrêt (11, 13 ; 51) séparé, indépendant du mécanisme d'enclenchement, étant monté de manière excentrique sur le chariot (17) pour pivoter sur le chariot (17), de telle sorte qu'en raison d'une accélération dirigée vers le bas et de son inertie, le cliquet d'arrêt (11, 13 ; 51) pivote depuis une position de repos, dans laquelle il permet un déplacement du chariot (17), jusque dans une position de blocage, **caractérisé en ce que** le cliquet d'arrêt (11, 13 ; 51) est monté pivotant sur le chariot (17) au moyen d'un axe (41) s'étendant perpendiculairement à la semelle transversale (19) de la glissière profilée en U (15), de telle sorte que dans la position de blocage, il s'engage sur une aile latérale (23) de la glissière profilée en U (15) et bloque le chariot (17) dans celle-ci.

2. Dispositif de réglage en hauteur de ceinture selon la revendication 1, **caractérisé en ce que** sur la face intérieure de l'aile latérale (23), sur laquelle s'engage le cliquet d'arrêt (51), sont prévues des surfaces d'enclenchement (27) pour le cliquet d'arrêt (51), lesquelles s'opposent additionnellement à un déplacement du chariot (17).

3. Dispositif de réglage en hauteur de ceinture selon la revendication 2, **caractérisé en ce que** les surfaces d'enclenchement (27) sont formées par des portions estampées (31) situées sur l'aile latérale (23) et orientées vers l'extérieur ou vers l'intérieur.

4. Dispositif de réglage en hauteur de ceinture selon la revendication 2, **caractérisé en ce que** les surfaces d'enclenchement (27) sont formées par des évidements (29) ou par des percées pratiquées dans l'aile latérale (23).

5. Dispositif de réglage en hauteur de ceinture selon l'une des revendications précédentes, **caractérisé en ce qu'**il est prévu sur le chariot (17) deux cliquets d'arrêts (11, 13) qui peuvent pivoter dans des directions opposées et qui, en position de blocage, s'engagent sur des brides latérales (23, 25) opposées et se bloquent mutuellement.

6. Dispositif de réglage en hauteur de ceinture selon la revendication 5, **caractérisé en ce que** les cliquets d'arrêt (11, 13) sont articulés sur un axe commun (41).

7. Dispositif de réglage en hauteur de ceinture selon l'une des revendications 1 à 4, **caractérisé en ce que** dans la position de blocage dans laquelle il s'engage sur une aile latérale (23), le cliquet d'arrêt (51) provoque un déplacement latéral tel du chariot (17) qu'un talon d'enclenchement (43) sur le chariot (17) s'engage dans l'un de plusieurs évidements (21) espacés ménagés dans l'aile latérale opposée (25).

8. Dispositif de réglage en hauteur de ceinture selon la revendication 7, **caractérisé en ce que** les évidements (21) sont les ouvertures d'enclenchement (71) pratiquées dans la glissière profilée en U (15).

9. Dispositif de réglage en hauteur de ceinture selon l'une des revendications précédentes, **caractérisé en ce que** le cliquet d'arrêt (11, 13 ; 51) est monté de manière à pivoter librement.
